(19) Europäisches Patentamt
European Patent Office
Office européen des brevets

(11) **EP 1 768 241 A2**

(12) **EUROPÄISCHE PATENTANMELDUNG**

(43) Veröffentlichungstag:
**28.03.2007 Patentblatt 2007/13**

(51) Int Cl.:
**H02M 3/158** (2006.01)

(21) Anmeldenummer: **06119804.0**

(22) Anmeldetag: **30.08.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **26.09.2005 DE 102005045889**

(71) Anmelder: **SIEMENS AKTIENGESELLSCHAFT**
**80333 München (DE)**

(72) Erfinder: **Götzenberger, Martin**
**85051, Ingolstadt (DE)**

(54) **Mehrphasiger Gleichstromsteller und Verfahren zum Betreiben desselben**

(57) Die Erfindung betrifft einen mehrphasigen Gleichstromsteller (10), der eine Eingangsspannung (U1) eines Eingangskondensators (6) in eine Ausgangsspannung (U2) eines Ausgangskondensators (7) wandelt, mit:
einer Vielzahl N von zwischen dem Eingangskondensator (6) und dem Ausgangskondensator (7) parallel geschalteten Gleichstromstellern (1, 2, 3), wobei jeweils der n-te Gleichstromsteller (1, 2, 3), mit n ∈ [1,..,N], ausgangsseitig einen n-ten Ladestrom (I1, 12, 13) zum Laden des Ausgangskondensators (7) bereitstellt; und einer Regelungsvorrichtung (4, 5), welche jeweils eine Phasendifferenz zweier Ladeströme (11, 12, 13), die den Ausgangskondensator (7) sequentiell laden, auf einen

Wert von $\dfrac{360°}{N}$ regelt.

FIG 2

EP 1 768 241 A2

**Beschreibung**

Die Erfindung betrifft einen mehrphasigen Gleichstromsteller, der eine Eingangsspannung eines Eingangskondensators in eine Ausgangsspannung eines Ausgangskondensators wandelt.

Bei modernen Brennkraftmaschinen mit Kraftstoffeinspritzung besteht der Bedarf, die verwendeten Einspritzventile mit einem kurzen Stromstoß einer hohen Stromstärke zu versorgen. Der Ausgangskondensator wirkt insbesondere als kapazitiver Energiespeicher, zum Beispiel für das Einspritzventil der Brennkraftmaschine.

Bei der Energieversorgung eines Einspritzventils durch den Ausgangskondensator des Gleichstromstellers stellt die elektromagnetische Verträglichkeit (EMV) ein wichtiges Kriterium bei der Auslegung des Gleichstromstellers dar.

Für die Implementierung des Gleichstromstellers oder DC/DC-Wandlers kommen viele bekannte Topologien und Betriebsverfahren zum Einsatz. Je nach bereitzustellender Leistung und Anforderung an das EMV-Verhalten des Gleichstromstellers werden auch mehrphasige Wandler verwendet. Allerdings besitzen einphasige Wandler oder Gleichstromsteller den Vorteil, an der Lückgrenze betrieben werden zu können. Die Lückgrenze bezeichnet dabei die Grenze zwischen einem lückenden und einem nicht-lückenden Betrieb. Der Betrieb an der Lückgrenze zeichnet sich durch ein besonders günstiges EMV-Verhalten insbesondere im hochfrequenten Betriebsbereich aus, in welchem Maßnahmen zur Reduktion von Störungen, welche die elektromagnetische Verträglichkeit negativ beeinflussen, nur mit einem hohen Aufwand realisierbar sind.

Der Betrieb an der Lückgrenze bedeutet allerdings, dass ein fester Zusammenhang zwischen der Betriebsfrequenz, der Eingansspannung, der Ausgangsspannung und dem Strom-Sollwert des Gleichstromstellers besteht. Dieser feste Zusammenhang steht zunächst im Widerspruch zur Verwendung eines mehrphasigen Gleichstromstellers, der zur Leistungssteigerung bei gleichzeitiger Reduzierung niederfrequenter Rippelströme eingesetzt wird. Zieht beispielsweise eine Stufe des mehrphasigen Gleichstromstellers Strom, so ist der Betrieb des mehrphasigen Gleichstromstellers an der Lückgrenze aufgrund der Abhängigkeit der jeweiligen Frequenzen oder Betriebsfrequenzen der Stufen des Gleichstromstellers von dem jeweils gezogenen Strom herkömmlicherweise nicht mehr möglich.

Die Aufgabe der vorliegenden Erfindung besteht daher darin, einen mehrphasigen Gleichstromsteller an der Lückgrenze zu betreiben.

Erfindungsgemäß wird diese gestellte Aufgabe durch einen mehrphasigen Gleichstromsteller mit den Merkmalen des Patentanspruches 1 und/oder durch ein Verfahren zum Betreiben eines mehrphasigen Gleichstromstellers mit den Merkmalen des Patentanspruches 12 gelöst.

Bei herkömmlichen selbstschwingenden DC/DC-Wandlern oder Gleichstromstellern, wie ihn jeder Wandler, der an der Lückgrenze betrieben wird, darstellt, wird die Frequenzänderung in Abhängigkeit der Stromvorgabe als unvermeidbarer Nachteil hingenommen. Die der Erfindung zugrunde liegende Idee besteht gerade darin, diesen Effekt zur Frequenzsteuerung auszunutzen. Die Phasenlage jeweils zweier Gleichstromsteller des mehrphasigen Gleichstromstellers zueinander wird dazu verwendet, ein Steuersignal für den Stromsoll-Wert zu generieren. Somit wird ein Phasenregelkreis geschlossen und die gewünschte Phasenlage der Vielzahl N der Gleichstromsteller zueinander wird eingehalten. Dabei wird nicht die Phase eines Gleichstromstellers des mehrphasigen Gleichstromstellers derart geregelt, dass diese ein gewünschtes Verhältnis zu einem Master-Oszillator aufweist. Erfindungsgemäß werden alle Konverter oder Gleichstromsteller des mehrphasigen Gleichstromstellers derart geregelt, dass jeweils die Phasendifferenz der Ladeströme zweier Gleichstromsteller, die den Ausgangskondensator sequentiell laden, einen Wert von $\dfrac{360°}{N}$ aufweist.

Vorteilhafterweise kombiniert die vorliegende Erfindung die Vorteile eines mehrphasigen oder mehrphasigen Gleichstromstellers oder Spannungswandlers und die Vorteile des Betriebes an der Lückgrenze. Der Vorteil eines mehrphasigen Spannungswandlers im Gegensatz zu einem einstufigen Spannungswandler, der ausgangsseitig einen ebenso hohen Ausgangsstrom bereitstellt, liegt insbesondere darin, dass die Effektivstromwerte der Eingangskapazität und der Ausgangskapazität des mehrphasigen Gleichstromwandlers deutlich geringer sind als bei einem einphasigen Wandler.

Vorteilhafterweise kombiniert außerdem der Betrieb an der Lückgrenze gerade einen Vorteil des lückenden Betriebes und einen Vorteil des nicht-lückenden Betriebes. Der Vorteil des lückenden Betriebes besteht insbesondere darin, dass der aktive Transistor zu Zeitpunkten geschaltet wird, in denen die Freilaufdiode des Gleichstromwandlers stromlos ist. Zu einem solchen Zeitpunkt tritt insbedondere auch kein Stromabriss in der Diode auf und ein gutes EMV-Verhalten des Gleichstromwandlers wird sichergestellt. Der Vorteil des nicht-lückenden Betriebes besteht insbesondere darin, dass der Ladestrom in keinem Zeitbereich gleich Null ist und somit kein Zeitbereich ungenützt für das Aufladen des Kondensators bleibt. Der Betrieb an der Lückgrenze stellt also einen optimalen Kompromiss zwischen dem Wirkungsgrad des mehrphasigen Gleichstromstellers und seinem EMV-Verhalten dar.

Vorteilhafte Ausgestaltungen und Weiterbildungen der Erfindung ergeben sich aus den Unteransprüchen sowie aus der Beschreibung unter Bezugnahme auf die Zeichnungen.

Gemäß einer bevorzugten Weiterbildung der Erfindung weist der n-te Gleichstromsteller eine Spitzenstrom-Detektionsvorrichtung auf, die ein Spitzenstrom-Detektionssignal bereitstellt, falls der Ladestrom des n-ten Gleichstromstellers größer als ein für den n-ten Gleichstromsteller vorgegebenes Strom-Sollwert-Signal ist.

Gemäß einer weiteren bevorzugten Weiterbildung weist die Regelungsvorrichtung zumindest ein erstes RS-Flip-Flop auf, das zumindest für den n-ten Gleichstromsteller ein n-tes Phasendifferenzsignal aus einer Phasendifferenz zwischen dem n-ten Spitzenstrom-Detektionssignal und dem (n+1)-ten Spitzenstrom-Detektionssignal ausgangsseitig bereitstellt. Die Spitzenstrom-Detektionssignale der Spitzenstrom-Detektionsvorrichtungen der einzelnen Gleichstromsteller werden also dazu genutzt, die jeweiligen Phasendifferenzen der Ladeströme, die den Ausgangskondensator sequentiell laden, bereitzustellen. Mittels der bereitgestellten Phasendifferenzen ist dann eine Synchronisation der einzelnen Gleichstromsteller des mehrphasigen Gleichstromstellers möglich, wobei die jeweiligen Phasendifferenzen der sequenziellen La-deströme jeweils einen Wert von $\frac{360°}{N}$ -aufweisen.

Gemäß einer weiteren bevorzugten Weiterbildung weist die n-te Spitzenstrom-Detektionsvorrichtung folgende Vorrichtungen auf:

- einen ersten Widerstand, der in Abhängigkeit des n-ten Ladestromes, der ausgangsseitig von einem induktiven Stellglied des n-ten Gleichstromstellers bereitgestellt ist, ein Strom-Istwert-Signal bereitstellt;
- eine erste Filtervorrichtung, die das bereitgestellte Strom-Istwert-Signal filtert und ausgangsseitig ein gefiltertes Strom-Istwert-Signal bereitstellt;
- eine zweite Filtervorrichtung, die das vorgegebene Strom-Sollwert-Signal filtert und ausgangsseitig ein gefiltertes Strom-Sollwert-Signal bereitstellt;
- einen Komparator, der eingangsseitig an seinem positiven Eingang das gefilterte Strom-Sollwert-Signal und an seinem negativen Eingang das gefilterte Strom-Istwert-Signal empfängt und ausgangsseitig das Spitzenstrom-Detektionssignal auf einen negativen logischen Signalpegel setzt, falls das gefilterte Strom-Istwert-Signal größer als das gefilterte Strom-Sollwert-Signal ist.

Vorteilhafterweise filtern die erste Filtervorrichtung und die zweite Filtervorrichtung Störungen des bereitgestellten Strom-Istwert-Signals beziehungsweise des vorgegebenen Strom-Sollwert-Signals.

Gemäß einer weiteren bevorzugten Weiterbildung weist der n-te Gleichstromsteller eine Rückschwing-Detektionsvorrichtung auf, die eine Schalterspannung eines steuerbaren Leistungsschalters beim Freilaufen des n-ten Ladestromes über eine Freilaufdiode des n-ten Gleichstromstellers misst und ausgangsseitig ein Rückschwing-Detektionssignal auf einen negativen logischen Signalpegel setzt, falls die gemessene Schalterspannung kleiner als eine vorgegebene Spannungsschwelle ist. Vorteilhafterweise werden bei der vorliegenden Erfindung insbesondere negative Signalpegel für die verschiedenen Signale genutzt, da die bevorzugten Vergleicher, die zur Umsetzung des analogen Signals in ein digitales Signal dienen, bei einem Signal, das zu fallenden Flanken des Ausgangssignals führt, schneller reagieren. Somit ergeben sich Geschwindigkeitsvorteile.

Gemäß einer weiteren bevorzugten Weiterbildung weist der n-te Gleichstromsteller die folgenden Vorrichtungen auf:

- eine Steuerschaltung, die eingangsseitig das Spitzenstrom-Detektionssignal und das Rückschwing-Detektionssignal empfängt und ausgangsseitig ein Steuersignal bereitstellt, wobei die Steuerschaltung das Steuersignal auf einen negativen logischen Signalpegel setzt, falls das Spitzenstrom-Detektionssignal den negativen logischen Signalpegel aufweist, und zurücksetzt, falls das Rückschwing-Detektionssignal den negativen logischen Signalpegel aufweist; und
- eine Treibervorrichtung, die eingangsseitig das Steuersignal empfängt und ausgangsseitig ein Schaltsignal bereitstellt, das den Leistungsschalter einschaltet, falls das Steuersignal einen negativen logischen Signalpegel aufweist, und ausschaltet, falls das Steuersignal den negativen logischen Signalpegel nicht aufweist.

Gemäß einer bevorzugten Ausgestaltung der Erfindung weist die Steuerschaltung ein zweites RS-Flip-Flop auf, das an seinem Set-Eingang das Spitzenstrom-Detektionssignal und an seinem Reset-Eingang das Rückschwing-Detektionssignal empfängt. Vorteilhafterweise wird mittels des zweiten RS-Flip-Flops das Steuersignal zum Ansteuern der Treibervorrichtung aus dem Spitzenstrom-Detektionssignal und dem Rückschwing-Detektionssignal generiert. Insbesondere wird das Steuersignal mittels des Rückschwing-Detektionssignals gesetzt und mittels des Spitzenstrom-Detektionssignals zurückgesetzt.

Gemäß einer weiteren bevorzugten Ausgestaltung ist das erste RS-Flip-Flop und/oder das zweite RS-Flip-Flop aus NAND-Gattern aufgebaut. Vorteilhafterweise werden NAND-Gatter und eine entsprechende negative Logik verwendet, da NAND-Gatter weit verbreitet, und dadurch besonders preiswert sind. Außerdem stehen auch fertig verschaltete RS-Flip-Flops aus NAND-Gattern zur Verfügung.

Gemäß einer weiteren bevorzugten Ausgestaltung setzt das erste RS-Flip-Flop das n-te Phasendifferenzsignal auf einen positiven logischen Signalpegel, falls das n-te Spitzenstrom-Detektionssignal den negativen logischen Signalpegel aufweist, und auf einen negativen logischen Signalpegel, falls das (n+1)-te Spitzenstrom-Detektionssignal den negativen logischen Signalpegel aufweist.

Gemäß einer weiteren bevorzugten Ausgestaltung weist die Regelungsvorrichtung einen Strom-Sollwert-Generator auf, der eine Anzahl N von RC-Gliedern aufweist, wobei das n-te RC-Glied in Abhängigkeit des bereitgestellten n-ten Phasendifferenzsignals ein n-tes Strom-Sollwert-Signal bereitstellt. Insbesondere bildet das n-te RC-Glied einen Mittelwert über das bereitgestellte n-te Phasendifferenzsignal und stellt somit ein n-tes analoges Strom-Sollwert-Signal bereit.

Gemäß einer weiteren bevorzugten Ausgestaltung ist die zweite Filtervorrichtung als eine zwischen dem Strom-Sollwert-Generator und Masse angeordnete Serienschaltung eines zweiten Widerstandes und eines zu einem Kondensator parallel geschalteten dritten Widerstandes ausgebildet.

Die Erfindung wird nachfolgend anhand der in den schematischen Figuren der Zeichnung angegebenen Ausführungsbeispielen näher erläutert. Es zeigen:

Figur 1 ein schematisches Blockdiagramm eines ersten Ausführungsbeispieles des erfindungsgemäßen mehrphasigen Gleichstromstellers;

Figur 2 ein schematisches Blockdiagramm eines zweiten Ausführungsbeispieles des erfindungsgemäßen mehrphasigen Gleichstromstellers;

Figur 3 ein schematisches Blockdiagramm eines Ausführungsbeispieles einer Regelungsvorrichtung eines dreistufigen Gleichstromstellers gemäß der vorliegenden Erfindung;

Figuren 4a - 4f schematische Ablaufdiagramme einer erfindungsgemäßen Regelung zweier Gleichstromsteller eines zweistufigen Gleichstromstellers, deren Phasendifferenz ungleich 180° ist;

Figuren 5a - 5f schematische Ablaufdiagramme der beiden Gleichstromsteller gemäß der Figuren 4a - 4f im eingeregelten Zustand; und

Figur 6 ein schematisches Ablaufdiagramm eines bevorzugten Ausführungsbeispieles des erfindungsgemäßen Verfahrens.

In allen Figuren sind gleiche beziehungsweise funktionsgleiche Elemente und Signale - sofern nichts Anderes angegeben ist - mit denselben Bezugszeichen versehen worden.

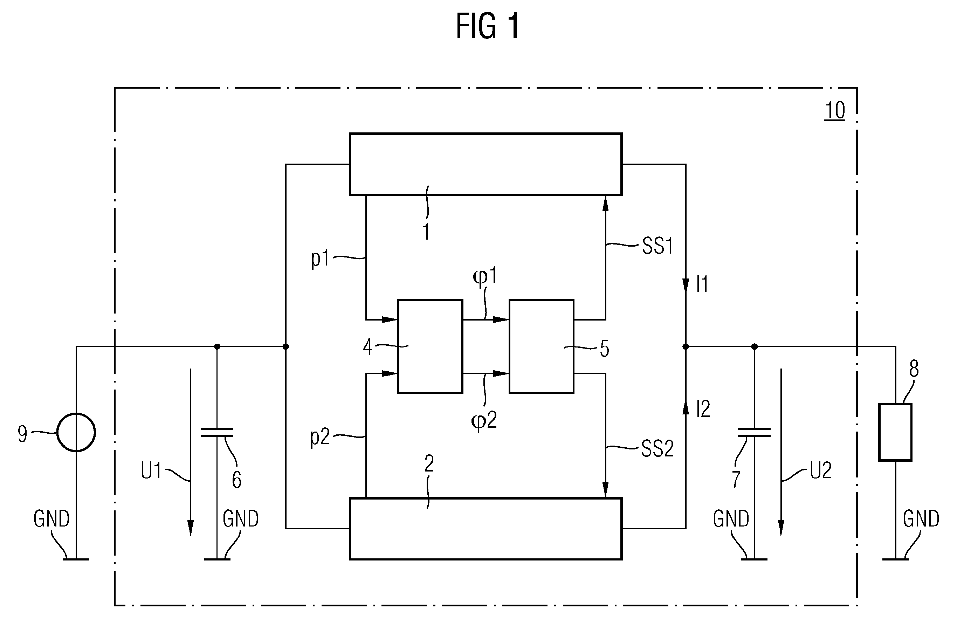

In Figur 1 ist ein schematisches Blockdiagramm eines ersten Ausführungsbeispieles des erfindungsgemäßen mehrphasigen Gleichstromstellers 10 dargestellt. Ohne Einschränkung der Allgemeinheit ist der mehrphasige Gleichstromsteller gemäß dem ersten Ausführungsbeispiel als ein zweistufiger Gleichstromsteller ausgebildet (N = 2). Das erste Ausführungsbeispiel gemäß Figur 1 zeigt den zweistufigen Gleichstromsteller 10, der einen ersten Gleichstromsteller 1 als erste Stufe oder erste Phase und einen zweiten Gleichstromsteller 2 als zweite Stufe oder zweite Phase aufweist.

Der erste Gleichstromsteller 1 und der zweite Gleichstromsteller 2 sind zwischen einem Eingangskondensator 6 und einem Ausgangskondensator 7 parallel geschaltet. Der Eingangskondensator 6 ist vorzugsweise parallel zu einer Energieversorgungsvorrichtung 9, beispielsweise einer Batterie, geschaltet. Die Energieversorgungsvorrichtung 9 versorgt den Eingangskondensator 6 mit Energie, sodass an diesem eine Eingangsspannung U1 anliegt. Der mehrphasige Gleichstromsteller 10 wandelt die Eingangsspannung U1 in eine Ausgangsspannung U2. Der Ausgangskondensator 7 wirkt als Energiespeicher. An dem Ausgangskondensator 7 liegt die gewandelte Ausgangsspannung U2 an. Mittels der gespeicherten Ausgangsspannung U2 wird eine Last 8 mit Energie versorgt. Die Last 8 ist beispielsweise als ein Einspritzventil einer Brennkraftmaschine eines Automobils ausgebildet. Hierbei kann es sich sowohl um eine kapazitive, als auch um eine induktive Last, insbesondere um ein piezoelektrisches Stellglied handeln.

Des Weiteren weist der mehrphasige Gleichstromsteller 10 erfindungsgemäß eine Regelungsvorrichtung auf, die vorzugsweise aus einer Phasenvergleichsvorrichtung 4 und einem Strom-Sollwert-Generator 5 ausgebildet ist.

Der erste Gleichstromsteller 1 stellt ausgangsseitig einen schwingenden ersten Ladestrom I1 und der zweite Gleichstromsteller 2 stellt ausgangsseitig einen schwingenden zweiten Ladestrom I2 bereit. Der erste Ladestrom I1 und der zweite Ladestrom I2 laden den Ausgangskondensator 7.

Der erste Gleichstromsteller 1 stellt ferner ausgangsseitig ein Spitzenstrom-Detektionssignal p1 bereit, falls der erste Ladestrom I1 größer als ein für den ersten Gleichstromsteller 1 vorgegebener Strom-Sollwert ist. Analog stellt der zweite Gleichstromsteller 2 ein Spitzenstrom-Detektionssignal p2 bereit, falls der zweite Ladestrom I2 größer als ein für den zweiten Gleichstromsteller 2 vorgegebener Strom-Sollwert ist. Die Phasenvergleichsvorrichtung 4 empfängt eingangsseitig die Spitzenstrom-Detektionssignale p1 und p2 des ersten Ladestromes I1 und des zweiten Ladestromes I2 und stellt ausgangsseitig ein erstes Phasendifferenzsignal φ1 und ein zweites Phasendifferenzsignal φ2 bereit. Das erste Phasendifferenzsignal φ1 ergibt sich aus der Differenz zwischen dem ersten Spitzenstrom-Detektionssignal p1 und dem zweiten Spitzenstrom-Detektionssignal p2. Vorzugsweise wird das erste Phasendifferenzsignal φ1

durch das erste Spitzenstrom-Detektionssignal p1 gesetzt und mittels des zweiten Spitzenstrom-Detektionssignal p2 zurückgesetzt. Das zweite Phasendifferenzsignal φ2 wird hingegen mittels des zweiten Spitzenstrom-Detektionssignals p2 gesetzt und mittels des ersten Spitzenstrom-Detektionssignals p1 zurückgesetzt.

Der Strom-Sollwert-Generator 5 stellt ausgangsseitig ein erstes Strom-Sollwert-Signal SS1 in Abhängigkeit des ersten Phasendifferenzsignals φ1 und ein zweites Strom-Sollwert-Signal SS2 in Abhängigkeit des zweiten Phasendifferenzsignals φ2 bereit.

Der erste Gleichstromsteller 1, die Phasenvergleichsvorrichtung 4 und der Strom-Sollwert-Generator 5 bilden einen ersten Phasenregelkreis aus. Der zweite Gleichstromsteller 2, die Phasenvergleichsvorrichtung 4 und der Strom-Sollwert-Generator 5 bilden einen zweiten Phasenregelkreis aus. Mittels des ersten Strom-Sollwert-Signals SS1 und des zweiten Strom-Sollwert-Signals SS2 werden der erste Gleichstromsteller 1 und der zweite Gleichstromsteller 2 derart geregelt, dass die Phasendifferenz der beiden Ladenströme I1 und I2 einen Wert von 180° aufweist. Der zweistufige Gleichstromsteller 10 gemäß Figur 1 weist zwei (N=2) Gleichstromsteller 1, 2 auf, sodass sich - wie dargestellt - eine Regelgröße

$$ \text{von} \quad \frac{360°}{N} = 180° \quad \text{ergibt.} $$

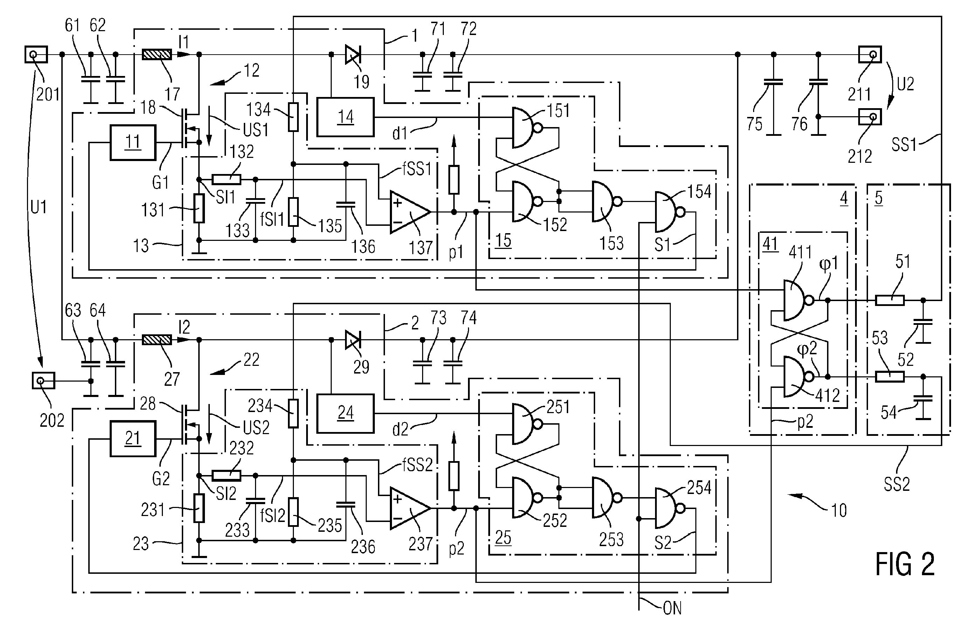

Figur 2 zeigt ein bevorzugtes Ausführungsbeispiel des in Figur 1 dargestellten zweistufigen Gleichstromstellers 10. Im Folgenden werden die Bauteile und Signale, wie Widerstände oder Kondensatoren, mittels ihrer Bezugszeichen referenziert.

Analog zu Figur 1 weist der erfindungsgemäße zweistufige Gleichstromsteller 10 einen ersten Gleichstromsteller 1 und einen zweiten Gleichstromsteller 2 auf. Vorzugsweise sind der erste Gleichstromsteller 1 und der zweite Gleichstromsteller 2 baugleich ausgebildet. Im Weiteren wird nur der erste Gleichstromsteller 1 beschrieben. Für den baugleichen zweiten Gleichstromsteller 2 gilt Analoges.

Der erste Gleichstromsteller 1 weist ein induktives Stellglied 17, beispielsweise eine Drossel oder eine Spule, einen steuerbaren Leistungsschalter 18, beispielsweise einen MOSFET oder einen IGBT, und eine Freilaufdiode 19 auf. Das induktive Stellglied 17, der steuerbare Leistungsschalter 18 und die Freilaufdiode 19 bilden einen Hochsetzsteller 12 aus.

Die Eingangsspannung U1 liegt zwischen den Eingangsanschlüssen 201 und 202 an. Die Ausgangsspannung U2 liegt zwischen den Ausgangsanschlüssen 211 und 212 an. Der Eingangskondensator 6 ist aus einer Parallelschaltung der Kondensatoren 61, 62, 63 und 64 ausgebildet. Dabei stellen insbesondere die Kondensatoren 61 und 62 Elektrolytkondensatoren und die Kondensatoren 62 und 64 Keramikkondensatoren dar. Der Ausgangskondensator ist als Parallelschaltung der Kondensatoren 71 bis 76 ausgebildet. Dabei sind die Kondensatoren 71 bis 74 insbesondere als Keramikkondensatoren und die Kondensatoren 75 und 76 als Elektrolytkondensatoren ausgebildet.

Weiterhin weist der erste Gleichstromsteller 1 eine Spitzenstrom-Detektionsvorrichtung 13 auf, die ein Spitzenstrom-Detektionssignal p1 bereitstellt, falls der erste Ladestrom I1 des ersten Gleichstromstellers 1 größer als ein für den ersten Gleichstromsteller 1 vorgegebenes Strom-Sollwert-Signal SS1 ist. Vorzugsweise weist dabei die erste Spitzenstrom-Detektionsvorrichtung 13 einen ersten Widerstand 131 auf, der in Abhängigkeit des ersten Ladestromes I1, der ausgangsseitig von dem induktiven Stellglied 17 bereitgestellt ist, ein Strom-Istwert-Signal SI1 bereitstellt. Somit wird der erste Ladestrom I1 mittels des ersten Widerstandes 131 gemessen, falls der Leistungsschalter 18 eingeschaltet ist. Der erste Widerstand 131 wirkt demnach als Strom-Mess-Widerstand (Shunt).

Des Weiteren weist die erste Spitzenstrom-Detektionsvorrichtung 13 eine erste Filtervorrichtung 132, 133 auf. Vorzugsweise ist die erste Filtervorrichtung 132, 133 als ein RC-Glied ausgebildet, das einen Widerstand 132 und einen Kondensator 133 aufweist. Das RC-Glied 132, 133 filtert das bereitgestellte Strom-Istwert-Signal SI1 und stellt ausgangsseitig ein gefiltertes Strom-Istwert-Signal fSI1 bereit.

Außerdem weist die erste Spitzenstrom-Detektionsvorrichtung 13 eine zweite Filtervorrichtung 134 - 136 auf, die das vorgegebene Strom-Sollwert-Signal SS1 filtert und ausgangsseitig ein gefiltertes Strom-Sollwert-Signal fSS1 bereitstellt. Vorzugsweise ist die zweite Filtervorrichtung 134 - 136 als eine zwischen dem Strom-Sollwert-Generator 5 und Masse GND angeordnete Serienschaltung eines zweiten Widerstandes 134 und eines zu einem Kondensator 136 parallel geschalteten dritten Widerstandes 135 ausgebildet.

Weiter weist die erste Spitzenstrom-Detektionsvorrichtung 13 vorzugsweise einen Komparator 137 auf. Der Komparator 137 empfängt eingangsseitig, insbesondere an seinem positiven Eingang das gefilterte Strom-Sollwert-Signal fSS1 und insbesondere an seinem negativen Eingang das gefilterte Strom-Istwert-Signal fSI1. Falls das gefilterte Strom-Istwert-Signal fSI1 größer als das gefilterte Strom-Sollwert-Signal fSS1 ist, setzt der Komparator 137 das Spitzenstrom-Detektionssignal p1 ausgangsseitig auf einen negativen logischen Signalpegel.

Außerdem weist der erste Gleichstromsteller 1 eine Rückschwing-Detektionsvorrichtung 14 auf. Die Rückschwing-Detektionsvorrichtung 14 misst eine Schalterspannung US1 des steuerbaren Leistungsschalters 18 beim Freilaufen des ersten Ladestromes I1 über die Freilaufdiode 19. Falls die gemessene Schalterspannung US1 kleiner als eine vorgegebene Spannungsschwelle ist, setzt die Rückschwing-Detektionsvorrichtung 14 ausgangsseitig ein Rückschwing-Detektionssignal d1 auf einen negativen logischen Signalpegel. Vorzugsweise wird eine negative Logik verwendet, da nachgeordnete Logik- oder Steuereinheiten insbesondere bei fallenden Flanken kürzere Reaktionszeiten aufweisen. Damit ergeben sich für den erfindungsgemäßen mehrphasigen Gleichstromsteller 10 erhebliche Geschwindigkeitsvorteile bei der Regelung oder Synchronisation der einzelnen Gleichstromstellerphasen 1, 2.

Weiterhin weist der erste Gleichstromsteller 1 vorzugsweise eine Steuerschaltung 15 auf. Die Steuerschaltung 15 empfängt eingangsseitig das Spitzenstrom-Detektionssignal p1 und das Rückschwing-Detektionssignal d1 und stellt ausgangsseitig ein Steuersignal S1 bereit. Vorzugsweise setzt die Steuerschaltung 15 das Steuersignal S1 auf einen logischen negativen Signalpegel, falls das Spitzenstrom-Detektionssignal p1 den negativen logischen Signalpegel aufweist, und setzt das Steuersignal S1 auf einen positiven logischen Signalpegel, falls das Rückschwing-Detektionssignal d1 den negativen logischen Signalpegel aufweist. Insbesondere weist die Steuerschaltung 15 ein zweites RS-Flip-Flop 151, 152 auf, das an seinem Set-Eingang das Spitzenstrom-Detektionssignal p1 und an seinem Reset-Eingang das Rückschwing-Detektionssignal d1 empfängt. Insbesondere ist das zweite RS-Flip-Flop 151, 152 aus zwei NAND-Gattern 151, 152 aufgebaut. Weiterhin weist die Steuerschaltung 15 ein NAND-Gatter 153 zur Invertierung des Ausgangssignals des NAND-Gatters 152 auf. Dem NAND-Gatter 153 ist ein weiteres NAND-Gatter 154 nachgeschaltet, das an seinen Eingängen zum einen das Ausgangssignal des NAND-Gatters 153 und ein Einschalt-Signal ON empfängt. Mittels des Einschalt-Signals ON ist der zweistufige Gleichstromsteller 10 ein- und ausschaltbar. Ausgangsseitig stellt das NAND-Gatter 154 dann das Steuersignal S1 bereit.

Weiter weist der erste Gleichstromsteller 1 eine Treibervorrichtung 11 auf, die eingangsseitig das Steuersignal S1 empfängt und ausgangsseitig ein Schaltsignal G1 bereitstellt, das den Leistungsschalter 18 einschaltet, falls das Steuersignal S1 einen negativen logischen Signalpegel aufweist, und ausschaltet, falls das Steuersignal S1 den negativen logischen Signalpegel nicht aufweist.

Vorzugsweise weist die Regelungsvorrichtung 4, 5 zumindest ein erstes RS-Flip-Flop 41 auf, das eingangsseitig das Spitzenstrom-Detektionssignal p1 des ersten Gleichstromstellers 1 und das Spitzenstrom-Detektionssignal p2 des zweiten Gleichstromstellers 2 empfängt und ausgangsseitig ein erstes Phasendifferenzsignal φ1 für den ersten Gleichstromsteller 1 und ein zweites Phasendifferenzsignal φ2 für den zweiten Gleichstromsteller 2 bereitstellt. Das erste Phasendifferenzsignal φ1 ergibt sich aus einer Differenz des ersten Spitzenstrom-Detektionssignals p1 und des zweiten Spitzenstrom-Detektionssignals p2. Das zweite Phasendifferenzsignal φ2 ergibt sich aus einer Differenz des zweiten Spitzenstrom-Detektionssignals p2 und des ersten Spitzenstrom-Detektionssignals p1. Vorzugsweise weist die Phasenvergleichsvorrichtung 4 bei einem zweistufigen Gleichstromsteller 10 genau ein einziges RS-Flip-Flop 41 auf, das beide Phasendifferenzsignale φ1 und φ2 bereitstellt. Insbesondere ist das RS-Flip-Flop 41 aus zwei NAND-Gattern 411, 412 aufgebaut. Vorzugsweise setzt das RS-Flip-Flop 41 das erste Phasendifferenzsignal φ1 auf einen positiven logischen Signalpegel, falls das erste Spitzenstrom-Detektionssignal p1 den negativen logischen Pegel aufweist, und auf einen negativen logischen Signalpegel, falls das zweite Spitzenstrom-Detektionssignal p2 den negativen logischen Signalpegel p2 aufweist. Für das zweite Phasendifferenzsignal φ2 gilt Inverses.

Außerdem weist die Regelungsvorrichtung 4, 5 vorzugsweise einen Strom-Sollwert-Generator 5 auf, der eine Anzahl N = 2 von RC-Gliedern 51, 52; 53, 54 aufweist. Das erste RC-Glied 51, 52 stellt in Abhängigkeit des bereitgestellten ersten Phasendifferenzsignals φ1 das erste Strom-Sollwert-Signal SS1 bereit. Das zweite RC-Glied 53, 54 stellt in Abhängigkeit des bereitgestellten zweiten Phasendifferenzsignals φ2 das zweite Strom-Sollwert-Signal SS2 bereit.

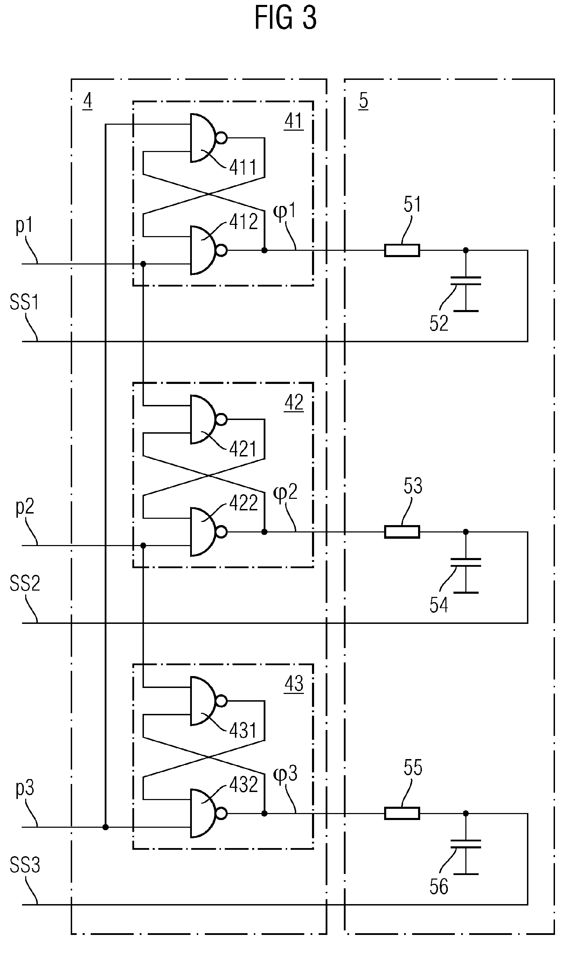

Figur 3 zeigt ein schematisches Blockdiagramm eines Ausführungsbeispieles einer Regelungsvorrichtung 4, 5 eines dreistufigen Gleichstromstellers gemäß der vorliegenden Erfindung. Dabei besteht der dreistufige Gleichstromsteller aus einem ersten Gleichstromsteller, einem zweiten Gleichstromsteller und einem dritten Gleichstromsteller (nicht gezeigt). Folglich betreffen das erste Spitzenstrom-Detektionssignal p1 und das erste Strom-Sollwert-Signal SS1 den ersten Gleichstromsteller, das zweite Spitzenstrom-Detektionssignal p2 und das zweite Strom-Sollwert-Signal SS2 den zweiten Gleichstromsteller und das dritte Spitzenstrom-Detektionssignal p3 und das dritte Strom-Sollwert-Signal SS3 den dritten Gleichstromsteller.

Vorzugsweise weist die Phasenvergleichsvorrichtung 4 die RS-Flip-Flops 41, 42 und 43 für den ersten Gleichstromsteller 1, den zweiten Gleichstromsteller 2 beziehungsweise den dritten Gleichstromsteller 3 auf. Dabei empfängt das RS-Flip-Flop 41 das Spitzenstrom-Detektionssignal p1 und das Spitzenstrom-Detektionssignal p3 und stellt ausgangsseitig das erste Phasendifferenzsignal φ1 bereit. Das zweite RS-Flip-Flop 42 empfängt eingangsseitig das Spitzenstrom-Detektionssignal p2 und das Spitzenstrom-Detektionssignal p3 und stellt ausgangsseitig das Phasendifferenzsignal φ2 bereit. Außerdem empfängt das RS-Flip-Flop 43 das Spitzenstrom-Detektionssignal p3 und das Spitzenstrom-Detektionssignal p1 und stellt ausgangsseitig das dritte Phasendifferenzsignal φ3 bereit. Gemäß der vorliegenden Erfindung werden die Phasendifferenzsignale φ1, φ2 und φ3 derart geregelt, dass zwischen ihnen jeweils eine

Phasendifferenz von $\dfrac{360°}{3} = 120°$, da N = 3, besteht.

Das RC-Filter 51, 52 generiert aus dem ersten Phasendifferenzsignal φ1 das Strom-Sollwert-Signal SS1. Für die RC-Glieder 53, 54 und 55, 56 gilt Analoges.

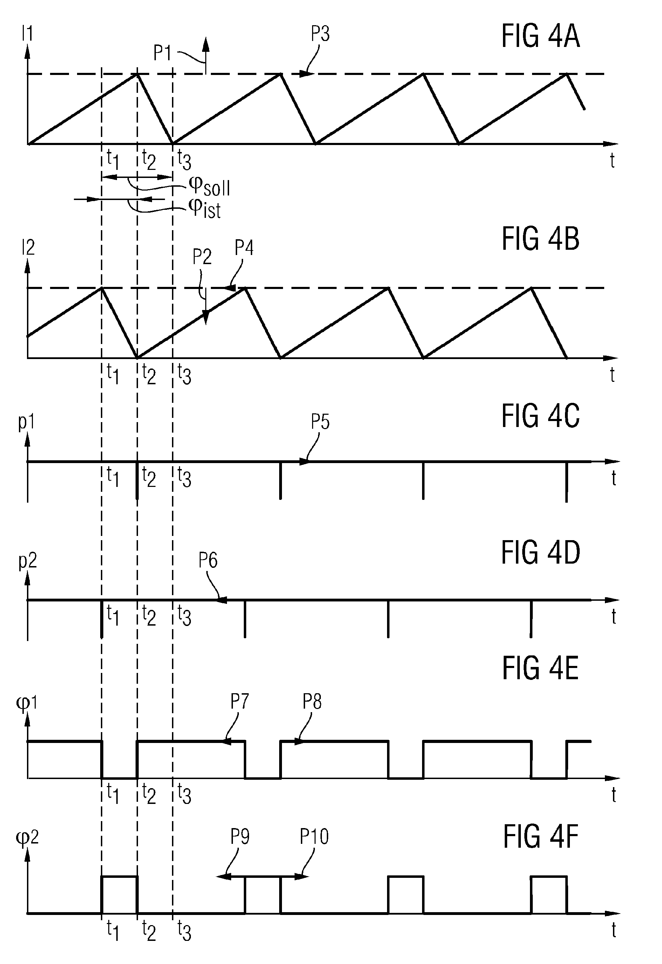

Die Figuren 4a bis 4f zeigen schematische Ablaufdiagramme einer erfindungsgemäßen Regelung zweier Gleichstromsteller eines zweistufigen Gleichstromstellers, deren Phasendifferenz ungleich 180° ist. Wie oben ausgeführt, müsste bei einem zweistufigen Gleichstromsteller die Phasendifferenz des ersten Ladestroms I1 des ersten Gleichstromstellers und des zweiten Ladestroms des zweiten Gleichstromstellers 180°

$$(\frac{360°}{2} = 180°, \text{ mit } N = 2)$$ betragen.

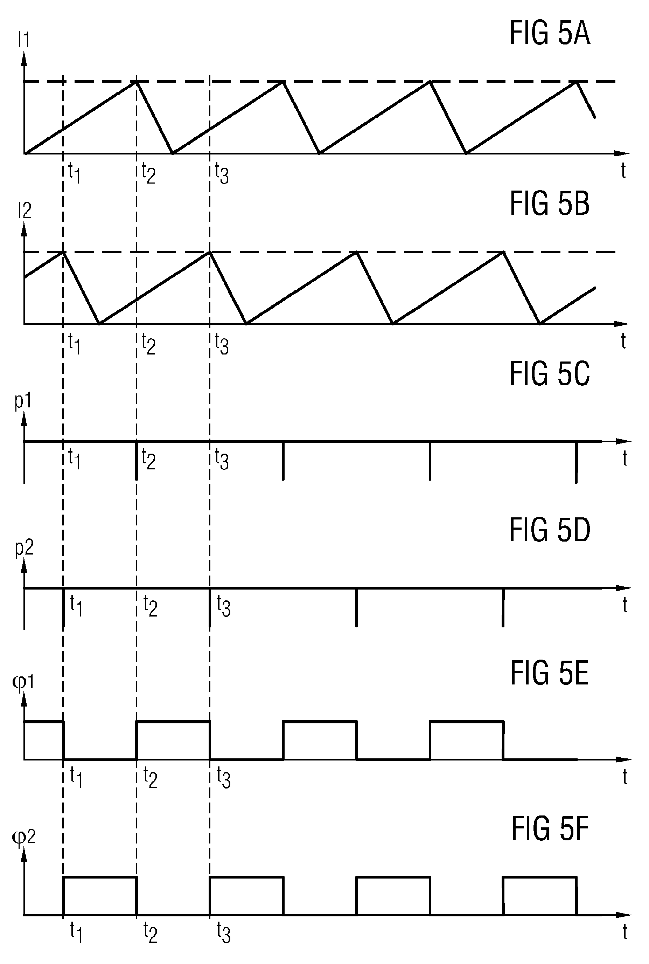

Insbesondere regelt der zweistufige Gleichstromsteller 10, wie er in Figur 3 dargestellt ist, die Phasendifferenz (siehe Figuren 4a - 4f) des ersten Ladestroms I1 und des zweiten Ladestroms I2 auf einen Wert von 180° (siehe Figuren 5a - 5f). Im Folgenden soll nun qualitativ gezeigt werden, wie erfindungsgemäß geregelt wird.

Figur 4a zeigt dabei den zeitlichen Verlauf des ersten Ladestroms I1 und Figur 4 b zeigt den zeitlichen Verlauf des zweiten Ladestroms 32. Zum Zeitpunkt t1 weist der zweite Ladestrom I2 ein Maximum auf, das heißt zum Zeitpunkt t1 weist der zweite Ladestrom I2 den Wert des zweiten Strom-Sollwert-Signals S2 auf. Folglich weist das zweite Spitzenstrom-Detektionssignal p2 zum Zeitpunkt t1 eine negative Flanke auf. Zum Zeitpunkt t2 dann weist der erste Ladestrom I1 ein Maximum auf, da dann dieser dem Wert des ersten Strom-Sollwert-Signals SS1 entspricht.

Die Differenz der Zeitpunkte t2 und t1 bezeichnet die tatsächliche Phasendifferenz oder Ist-Phasendifferenz φist. Des Weiteren ist die Soll-Phasendifferenz φsoll eingezeichnet, die sich aus der Differenz zwischen dem Zeitpunkt t3 und dem Zeitpunkt t1 ergibt. Demnach wurde gemäß dem Ausführungsbeispiel der Figuren 4a bis 4f das Maximum des ersten Ladestroms I1 zu früh erreicht (φist < φsoll, beziehungsweise t2 < t3), sodass auch das erste Spitzenstrom-Detektionssignal p1 zu früh gesetzt wurde. Demnach ergibt sich, dass das erste Phasendifferenzsignal φ1 ein Tastverhältnis von mehr als 50% (siehe Figur 4e) und das zweite Phasendifferenzsignal φ2 ein Tastverhältnis von weniger als 50% aufweist.

Erfindungsgemäß wird dann das erste Strom-Sollwert-Signal SS1 aufgrund des Tastverhältnisses des ersten Phasendifferenzsignals φ1 von mehr als 50% auf einen höheren Wert geregelt (siehe Pfeil mit dem Bezugszeichen P1) und das zweite Strom-Sollwert-Signal SS2 wird auf einen niedrigeren Wert geregelt (siehe Pfeil mit dem Bezugszeichen P2). Aufgrund dieser Regelung ergibt sich ein zeitlicher Verlauf, bei dem das Maximum des ersten Ladestroms I1 später detektiert (siehe Pfeil P3) und das Maximum des zweiten Ladestroms I2 früher detektiert wird (siehe Pfeil P4).

Als Konsequenz ergibt sich analog, dass das erste Spitzenstrom-Detektionssignal p1 später gesetzt wird (siehe Pfeil P5) und das zweite Spitzenstrom-Detektionssignal p2 früher gesetzt wird (siehe Pfeil P6).

Wiederum ergibt sich als Folge, dass sich das erste Phasendifferenzsignal φ1 von oben der Größe von 50% für das Tastverhältnis (siehe Pfeile P7, P8) und das zweite Phasendifferenzsignal φ2 von unten an die Größe von 50% für das Tastverhältnis annähert, bis für beide Phasendifferenzsignale φ1 und φ2 jeweils das Tastverhältnis von 50% erreicht ist.

Die Figuren 5a bis 5f zeigen schematische Ablaufdiagramme der beiden Gleichstromsteller gemäß der Figuren 4a bis 4f im eingeregelten Zustand. Dabei zeigen insbesondere die Figuren 5e und 5f, dass die beiden Phasendifferenzsignale φ1 und φ2 im eingeregelten Zustand jeweils ein Tastverhältnis von 50% aufweisen und zueinander um 180° phasenverschoben sind.

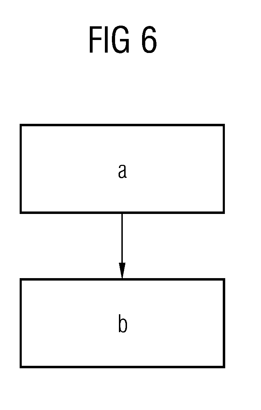

Figur 6 zeigt ein schematisches Ablaufdiagramm eines bevorzugten Ausführungsbeispiels des erfindungsgemäßen Verfahrens zum Betreiben eines mehrphasigen Gleichstromstellers 10, der eine Eingangsspannung U1 des Eingangskondensators 6 in eine Ausgangsspannung U2 eines Ausgangkondensators 7 wandelt.

Nachfolgend wird das erfindungsgemäße Verfahren anhand des Blockschaltbildes in Figur 6 erläutert. Das erfindungsgemäße Verfahren weist folgende Verfahrensschritte auf:

Verfahrensschritt a:

Bereitstellen einer Vielzahl N von zwischen dem Eingangskondensator 6 und dem Ausgangskondensator 7 parallel geschalteten Gleichstromstellern 1, 2, 3, wobei jeweils der n-te Gleichstromsteller 1, 2, 3, mit n∈ [1,...,N], ausgangsseitig einen schwingenden n-ten Ladestrom I1, I2, I3 zum Laden des Ausgangskondensators 7 bereitstellt.

Verfahrensschritt b:

Regeln jeweils einer Phasendifferenz zweier Ladeströme I1, I2, I3, die den Ausgangskondensator 7

sequentiell laden, auf einen Wert von $\frac{360°}{N}$.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Beispielsweise ist es denkbar, anstatt der NAND-Gatter der Regelungsvorrichtung XOR-Gatter zu verwenden. Außerdem ist es möglich, anstelle der Rückschwing-Detektionsvorrichtung eine Vorrichtung zur Messung des Ladestroms vorzusehen, welche ein Rückschwing-Detektionssignal in Abhängigkeit des Nulldurchgangs des Ladestroms berechnet. Zur Phasenregelung können auch alternativ statt der Spitzenstrom-Detektionssignale die Rückschwing-Detektionssignale oder die Ausgangssignale der Steuerschaltung verwendet werden. Selbstverständlich kann auch anstelle der bei den Ausführungsbeispielen verwendeten negativen Logik eine positive Logik zum Einsatz kommen. Ferner ist die vorliegende Erfindung nicht nur auf Hochsetzsteller, sondern auch auf Tiefsetzsteller anwendbar.

**Patentansprüche**

1. Mehrphasiger Gleichstromsteller (10), der eine Eingangsspannung (U1) eines Eingangskondensators (6) in eine Ausgangsspannung (U2) eines Ausgangskondensators (7) wandelt, mit:

   a) einer Vielzahl N von zwischen dem Eingangskondensator (6) und dem Ausgangskondensator (7) parallel geschalteten Gleichstromstellern (1, 2, 3), wobei jeweils ein n-ter Gleichstromsteller (1, 2, 3), mit $n \in [2,..,N]$, ausgangsseitig einen n-ten Ladestrom (I1, I2, 13) zum Laden des Ausgangskondensators (7) bereitstellt; und
   b) einer Regelungsvorrichtung (4, 5), welche jeweils eine Phasendifferenz zweier Ladeströme (I1, I2, I3), die den Ausgangskondensator (7) sequentiell laden, auf einen Wert von $\dfrac{360°}{N}$

   regelt.

2. Gleichstromsteller nach Anspruch 1,
   **dadurch gekennzeichnet,**
   **dass** der n-te Gleichstromsteller (1, 2) eine Spitzenstrom-Detektionsvorrichtung (13, 23) aufweist, die ein Spitzenstrom-Detektionssignal (p1, p2) bereitstellt, falls der Ladestrom (I1, 12) des n-ten Gleichstromstellers (1, 2) größer als ein für den n-ten Gleichstromsteller (1, 2) vorgegebenes Strom-Sollwert-Signal (SS1, SS2) ist.

3. Gleichstromsteller nach einem oder mehreren der vorstehenden Ansprüche,
   **dadurch gekennzeichnet,**
   **dass** die Regelungsvorrichtung (4, 5) zumindest ein erstes RS-Flip-Flop (41, 42, 43) aufweist, das zumindest für den n-ten Gleichstromsteller (1, 2, 3) ein n-tes Phasendifferenzsignal ($\varphi$1, $\varphi$2, $\varphi$3) aus einer Phasendifferenz zwischen dem n-ten Spitzenstrom-Detektionssignal (p1, p2, p3) und dem (n+1)-ten Spitzenstrom-Detektionssignal (p1, p2, p3) oder aus einem n-ten Rückschwing-Detektionssignal (d1) und einem (n+1)-ten Rückschwing-Detektionssignal oder aus einem n-ten Steuersignal (S1) und einem (n+1)-ten Steuersignal ausgangsseitig bereitstellt.

4. Gleichstromsteller nach Anspruch 2 oder 3,
   **dadurch gekennzeichnet,**
   **dass** die Spitzenstrom-Detektionsvorrichtung (13, 23) aufweist:

   - einen ersten Widerstand (131, 132), der in Abhängigkeit des n-ten Ladestroms (I1, I2), der ausgangsseitig von einem induktiven Stellglied (17, 27) des n-ten Gleichstromstellers (1, 2) bereitgestellt ist, ein Strom-Istwert-Signal (SI1, SI2) bereitstellt;
   - eine erste Filtervorrichtung (132, 133; 232, 233), die das bereitgestellte Strom-Istwert-Signal (SI1, SI2) filtert und ausgangsseitig ein gefiltertes Strom-Istwert-Signal (fSI1, fSI2) bereitstellt;
   - eine zweite Filtervorrichtung (134-136; 234-236), die das vorgegebene Strom-Sollwert-Signal (SS1, SS2) filtert und ausgangsseitig ein gefiltertes Strom-Sollwert-Signal (fSS1, fSS2) bereitstellt; und
   - einen Komparator (137, 237), der eingangsseitig an seinem ersten Eingang das gefilterte Strom-Sollwert-Signal (fSS1, fSS2) und an seinem zweiten Eingang das gefilterte Strom-Istwert-Signal (fSI1, fSI2) empfängt und ausgangsseitig das Spitzenstrom-Detektionssignal (p1, p2) auf einen negativen logischen Signalpegel setzt, falls das gefilterte Strom-Istwert-Signal (fSI1, fSI2) größer als das gefilterte Strom-Sollwert-Signal (fSS1, fSS2) ist.

5. Gleichstromsteller nach einem oder mehreren der vorstehenden Ansprüche,
   **dadurch gekennzeichnet,**
   **dass** der n-te Gleichstromsteller (1, 2) eine Rückschwing-Detektionsvorrichtung (14, 24) aufweist, die eine Schalterspannung (US1, US2) eines steuerbaren Leitungsschalters (18, 28) beim Freilaufen des n-ten Ladestroms (I1, 12) über eine Freilaufdiode (19, 29) des n-ten Gleichstromstellers (1, 2) misst und ausgangsseitig das Rückschwing-Detektionssignal (d1, d2) auf einen negativen logischen Signalpegel setzt, falls die gemessene Schalterspannung (US1, US2) kleiner als eine vorgegebene Spannungsschwelle ist.

6. Gleichstromsteller nach einem oder mehreren der vorstehenden Ansprüche,
   **dadurch gekennzeichnet,**
   **dass** der n-te Gleichstromsteller (1, 2) aufweist:

   - eine Steuerschaltung (15, 25), die eingangsseitig das Spitzenstrom-Detektionssignal (p1, p2) und das Rückschwing-Detektionssignal (d1, d2) empfängt und ausgangsseitig das Steuersignal (S1, S2) bereitstellt, wobei die Steuerschaltung (15, 25) das Steuersignal (S1, S2) auf einen negativen logischen Signalpegel setzt, falls das Spitzenstrom-Detektionssignal (p1, p2) den negativen logischen Signalpegel aufweist, und zurücksetzt, falls das Rückschwing-Detektionssignal (d1, d2) den negativen logischen Signalpegel aufweist; und
- eine Treibervorrichtung (11, 21), die eingangsseitig das Steuersignal (S1, S2) empfängt und ausgangsseitig ein Schaltsignal (G1, G2) bereitstellt, das den Leistungsschalter (18, 28) einschaltet, falls das Steuersignal (S1, S2) einen negativen logischen Signalpegel aufweist, und ausschaltet, falls das Steuersignal (S1, S2) den negativen logischen Signalpegel nicht aufweist.

7. Gleichstromsteller nach einem oder mehreren der vorstehenden Ansprüche,
**dadurch gekennzeichnet,**
**dass** die Steuerschaltung (15, 25) ein zweites RS-Flip-Flop (151, 152; 251, 252) aufweist, das an seinem Set-Eingang das Spitzenstrom-Detektionssignal (p1, p2) und an seinem Reset-Eingang das Rückschwing-Detektionssignal (d1, d2) empfängt.

8. Gleichstromsteller nach einem oder mehreren der vorstehenden Ansprüche,
**dadurch gekennzeichnet ,**
**dass** das erste RS-Flip-Flop (41, 42, 43) und/oder das zweite RS-Flip-Flop (151, 152; 153, 154) aus NAND-Gattern aufgebaut ist.

9. Gleichstromsteller nach einem oder mehreren der vorstehenden Ansprüche,
**dadurch gekennzeichnet,**
**dass** das erste RS-Flip-Flop (41, 42, 43) das n-te Phasendifferenzsignal (φ1, φ2, φ3) auf einen positiven logischen Signalpegel setzt, falls das n-te Spitzenstrom-Detektionssignal (p1, p2, p3) den negativen logischen Signalpegel aufweist, und auf einen negativen logischen Signalpegel setzt, falls das (n+1)-te Spitzenstrom-Detektionssignal (p1, p2, p3) den negativen logischen Signalpegel aufweist.

10. Gleichstromsteller nach einem oder mehreren der vorstehenden Ansprüche,
**dadurch gekennzeichnet,**
**dass** die Regelungsvorrichtung (4, 5) einen Strom-Sollwert-Generator (5) aufweist, der eine Anzahl N von RC-Gliedern (51, 52; 53, 54; 55, 56) aufweist, wobei das n-te RC-Glied (51, 52; 53, 54; 55, 56) in Abhängigkeit des bereitgestellten n-ten Phasendifferenzsignals (φ1, φ2, φ3) ein n-tes Strom-Sollwert-Signal (SS1, SS2, SS3) bereitstellt.

11. Gleichstromsteller nach einem oder mehreren der vorstehenden Ansprüche,
**dadurch gekennzeichnet,**
**dass** die zweite Filtervorrichtung (134-136; 234-236) als eine zwischen dem Stromsollwert-Generator (5) und Masse (GND) angeordnete Serienschaltung eines zweiten Widerstandes (134, 234) und eines zu einem Kondensator (136, 236) parallel geschalteten dritten Widerstandes (135, 235) ausgebildet ist.

12. Verfahren zum Betreiben eines mehrphasigen Gleichstromstellers (10), insbesondere eines Gleichstromstellers nach einem der vorstehenden Ansprüche, der eine Eingangsspannung (U1) eines Eingangskondensators (6) in eine Ausgangsspannung (U2) eines Ausgangskondensators (7) wandelt, mit den Schritten:

a) Bereitstellen einer Vielzahl N von zwischen dem Eingangskondensator (6) und dem Ausgangskondensator (7) parallel geschalteten Gleichstromstellern (1, 2, 3), wobei jeweils der n-te Gleichstromsteller (1, 2, 3), mit n ∈ [2,...,N], ausgangsseitig einen schwingenden n-ten Ladestrom (11, I2, 13) zum Aufladen des Ausgangskondensators (7) bereitstellt; und
b) Regeln jeweils einer Phasendifferenz zweier Ladeströme (I1, I2, I3), die den Ausgangskondensator (7) sequentiell laden, auf einen Wert von $\dfrac{360°}{N}$ .

# FIG 1

EP 1 768 241 A2

FIG 2

# FIG 3

FIG 4A

FIG 4B

FIG 4C

FIG 4D

FIG 4E

FIG 4F

FIG 5A

FIG 5B

FIG 5C

FIG 5D

FIG 5E

FIG 5F

FIG 6